# DEMANDE DE BREVET EUROPEEN

(11) **EP 1 342 542 A1**
(43) Date de publication de la demande: **10.09.2003**
(21) Numéro de dépôt: 02405165.8
(22) Date de dépôt: 04.03.2002
(51) Int. Cl.: B27B 17/00, B62B 1/20

(54) **Véhicule de transport faisant office de support gabarit de sciage de bois de feu**

(71) Demandeur: Meier, Alois, 1023 Crissier (CH)
(72) Inventeur: Meier, Alois, 1023 Crissier (CH)
(74) Mandataire: WILLIAM BLANC & CIE

(57) **Abrégé**

Le véhicule (1) présente une table de sciage (12) apte d'une part à maintenir et fixer des pièces de bois pour leur transport et présentant d'autre part deux plans de coupe (A, B) permettant à l'utilisateur de directement débiter le bois fixé sur le véhicule.

## Description

La présente invention concerne un véhicule apte à servir efficacement aussi bien au transport de bois à couper et coupé ainsi que de support gabarit pour le débitage du bois, notamment du bois prévu pour le chauffage.

Le rassemblement des branches obtenues après élagage des troncs sur un chantier de coupe, leur découpe en bûches ainsi que le transport de ces dernières vers leur lieu d'utilisation nécessite généralement de nombreuses manipulations et est par conséquent peu rentable. De manière générale, on ne connaît pas de véhicule ou de moyen de transport apte à transporter de manière efficace, des branches élaguées pouvant facilement dépasser 1 m de longueur. Leur forme irrégulière impliquant un foisonnement important nécessite que le moyen de transport soit de volume important pour une masse de bois transportée relativement faible. Par ailleurs, vu que le lieu de ramassage de bois est souvent d'accès difficile, le passage d'un tel véhicule peut s'avérer problématique. S'il a été possible de transporter le bois depuis son lieu de ramassage vers le lieu de débitage où il est façonné en bûches, il est alors nécessaire de le décharger pour disposer les branches sur un chevalet ou gabarit de sciage pour effectuer cette dernière opération. On constate donc que de nombreuses manipulations sont nécessaires depuis le ramassage du bois jusqu'à son obtention en bûches débitées à la bonne longueur.

La demande FR 2.719.517 décrit un chariot de transport de bois dont il est possible d'assembler côte à côte deux exemplaires pour les charger simultanément, puis de couper les bois chargés selon un plan passant entre les deux chariots pour ensuite transporter le bois par deux chariots indépendants. Ce dispositif n'est pas satisfaisant puisqu'il est absolument nécessaire de débiter le bois avant son transport.

Un premier but de l'invention est donc de proposer un véhicule pour le transport du bois non encore ou déjà débité en bûches, pouvant en outre servir efficacement de support gabarit pour le débitage du bois en bûches.

Un autre but de l'invention est de proposer que le véhicule précédent soit adaptable, en position de véhicule de transport, à l'effort que peut fournir son utilisateur.

Un autre but de l'invention est de proposer que le véhicule précédent soit adaptable, en position de véhicule de transport, à la difficulté du terrain sur lequel il doit se déplacer.

Un autre but de l'invention est de proposer que le véhicule précédent soit très simple d'utilisation, et assurant un maximum de sécurité à son utilisateur.

Ces différents buts sont obtenus par un véhicule tel que décrit dans la revendication 1, d'autres formes d'exécution et variantes étant décrites dans les revendications dépendantes.

Encore d'autres avantages de l'invention apparaissent à la lecture de la description ci-dessous, qui est à considérer en regard du dessin annexé comportant les figures où :
la figure 1 représente une vue en perspective d'un véhicule selon l'invention, chargé pour le transport de bois,
la figure 2 représente une vue du même véhicule non chargé,
les figures 3A, 3B 3C et 3D représentent différentes possibilités de chargement du véhicule selon l'invention,
les figures 4A et 4B représentent deux positions d'un élément de séparation,
la figure 5 montre schématiquement un dispositif de fixation du bois à transporter,
la figure 6 montre un dispositif permettant d'éviter un déplacement latéral du bois,
les figures 7A, 7B., 7C et 7D montrent des variantes d'exécution du train de roulement,
la figure 8 montre une vue de face du véhicule montrant les plans de sciage,
les figures 9A et 9B représentent deux positions différentes d'une béquille d'appui du véhicule, et
la figure 10 montre une pièce de bois formant gabarit de sciage.

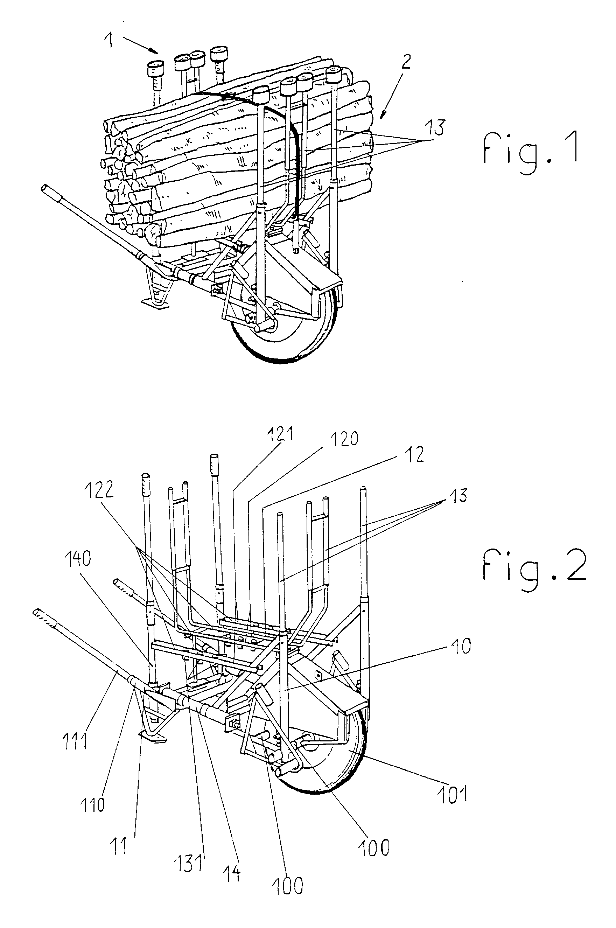

Le véhicule 1, selon la forme d'exécution représentée sur la figure 1 est constitué essentiellement en une brouette munie des éléments de support 13 nécessaires au transport de bois longs 2 ainsi qu'à son débitage en bûches.

La figure 2 montre plus en détail la constitution du véhicule sous la forme d'un cadre, constitué d'un porteur d'essieu 10, d'un châssis porteur 11, d'une table de sciage 12 et d'éléments de prolongation de fixation13. Ces différents éléments, de préférence démontables entre eux, sont réalisés de manière préférentielle à partir de tubes ou de profilés formés et soudés, reliés par des longerons 14 et des montants 140. Le porteur d'essieu 10 comprend en particulier un ou plusieurs logements de fixation 100, aptes à recevoir et fixer un essieu comportant au moins une roue 101 comme on le verra plus loin. De même, le châssis porteur 11 comprend des logements de fixation 110 pour recevoir et fixer les extrémités de deux bras d'un brancard 111. Le porteur d'essieu 10 et le châssis porteur 11 en particulier sont constitués de tubes ou de profilés assemblés pour former des triangles, cette forme géométrique offrant une résistance mécanique et une stabilité dimensionnelle remarquable. La table de sciage 12 comprend une portion centrale 120 et deux portions latérales 121, chacune de ces portions reliant une portion du porteur d'essieu 10 et du châssis porteur 11. La portion centrale 120 ainsi que les portions latérales 121 de la table de sciage 12 définissent un plan de sciage 122, de préférence horizontal ou parallèle au sol lorsque le dispositif est en position de sciage. Les éléments ci-dessus constituant le cadre sont assemblés par insertion de tubes ou par emboîtage, et sont fixés entre eux par tout moyen adéquat apte à assurer une bonne fixation et une rigidité suffisante à l'ensemble, par exemple par des systèmes à baïonnettes, par goupilles ou par boulonnage.

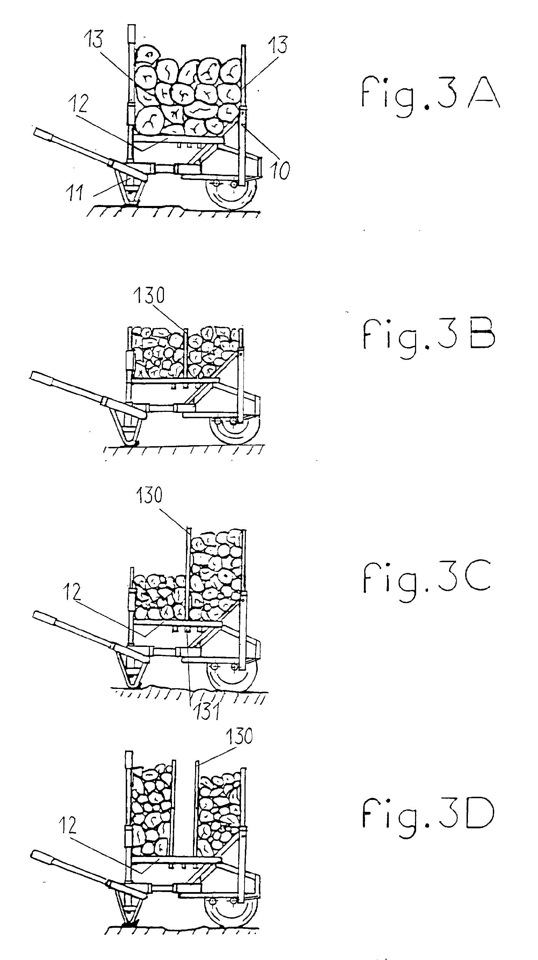

Pour le transport du bois, la table de sciage 12 offre sa surface d'appui constituée par le plan de sciage 122. Les éléments de prolongation 13 tels que montés ici sur le porteur d'essieu 10, le châssis porteur 11 et la table de sciage 12 permettent un chargement maximum du dispositif, tel qu'on le voit à la figure 1 ou à la figure 3A.

La figure 3B montre une autre configuration où les éléments de prolongation n'étant pas montés, la capacité de transport du dispositif est réduite.

La figure 3C montre encore une autre combinaison où des éléments de séparation 130, comme représentés plus en détail sur les figures 4A et 4B ont été introduits et fixés dans des logements de fixation adéquats 131 de la table de sciage 12. Le volume de chargement est séparé ici en deux compartiments, chacun de ces deux compartiments pouvant être complètement ou partiellement chargé, comme représenté sur la figure. Cette configuration peut être utilisée par exemple pour transporter du petit bois dans l'un des compartiments et du bois de plus forte section dans l'autre.

Une autre possibilité de chargement est représentée à la figure 3D où les éléments de séparation 130 sont fixés à la table de sciage 12 de manière à laisser un espace vide entre eux, ceci pour une raison qui sera expliquée plus loin. Comme précédemment, chacun des compartiments peut être chargé complètement ou partiellement.

Un des éléments de séparation 130 est plus particulièrement visible sur les figures 4A et 4B. Il est formé essentiellement d'un tube ou d'un profilé 132, pouvant être introduit dans une des fixations 131 de la portion 120 ou de l'une des portions 121 de la table de sciage 12, de manière à ce que l'élément de séparation soit fixé perpendiculairement à la surface d'appui 122 de la table de sciage. Une planche de bois 133 est fixée par des attaches 134 au tube 132 de manière à pouvoir prendre une position basse, comme représenté à la figure 4A, afin de limiter un ou des compartiments de faible hauteur, comme représenté à la figure 3B, ou une position haute, comme représenté à la figure 4B, pour limiter un ou des compartiments de grande hauteur, comme représenté aux figures 3C et 3D. Le maintien en position haute ou basse de la planche 133 sur le tube 132 se fait par une ou des goupilles, non représentée sur les figures, ou tout autre moyen convenable.

On constate donc que par les moyens décrits ci-dessus, il est possible d'adapter de volume, respectivement le poids ou la masse de bois transporté aux possibilités physiques de l'utilisateur.

On voit à la figure 5 un dispositif de fixation 15 du bois à transporter. Ce dispositif de fixation est constitué d'une portion 150 d'un élément souple, comme une sangle, une chaîne à maillons ou à rouleaux, un câble ou une corde dont une première extrémité 151, en forme de boucle, d'anneau ou de maillon, vient s'accrocher à un crochet correspondant 152, aménagé sur une portion inférieure du porteur d'essieu 10 ou du châssis porteur 11. L'autre extrémité de l'élément souple 150 est engagée dans un dispositif de mise sous tension 153 généralement connu de la technique. Le dispositif de fixation 15 comprend en outre un tendeur à ressort 154 dont une extrémité est fixée de manière facilement démontable à un point de fixation aménagé sur une portion inférieure du châssis porteur 11 ou du porteur d'essieu 10, l'autre extrémité du tendeur à ressort 154 étant reliée au dispositif de mise sous tension 153. Ainsi, on fixe tout d'abord le tendeur à ressort 154 à son point de fixation du châssis porteur 11, puis on passe l'élément souple 150 par-dessus le bois entassé sur le véhicule transporteur de manière à pouvoir fixer son extrémité 151 dans le crochet 152 du porteur d'essieu 10, puis on actionne le dispositif de mise sous tension 153 par son levier d'actionnement, de manière à tendre l'élément souple 150 puis le tendeur à ressort 154, afin d'assurer le serrage du bois et son maintien sur le véhicule de transport. Il est possible de ne prévoir qu'un seul dispositif de fixation 15 ou plus d'un seul sur le véhicule. Il est évident que le dispositif de fixation 15 peut être fixé au véhicule en d'autres endroits que ceux indiqués ci-dessus uniquement à titre d'exemple.

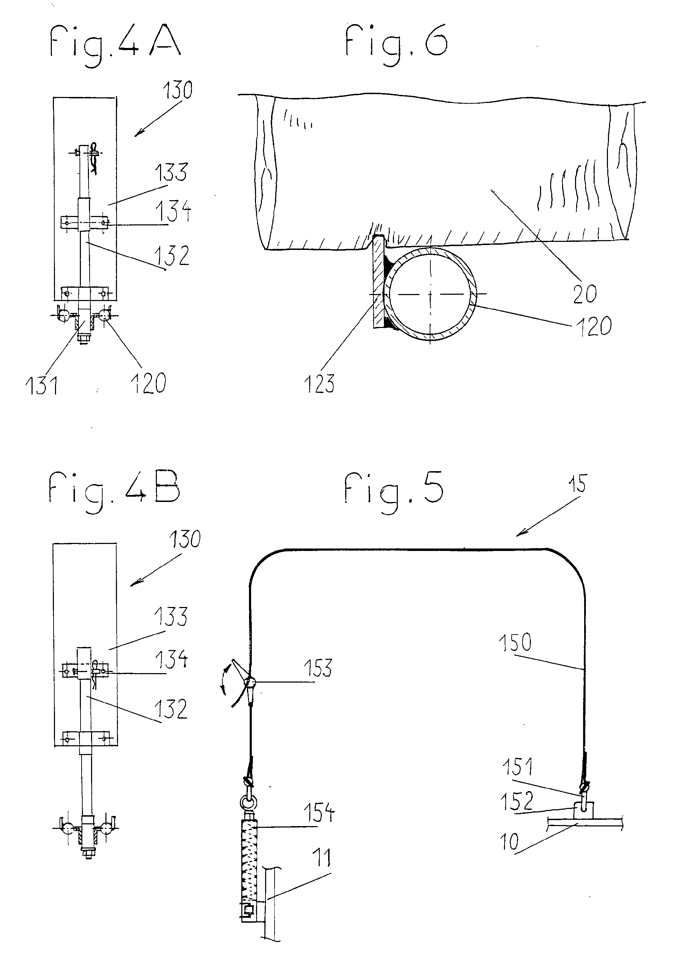

Afin d'empêcher un déplacement latéral des pièces de bois, les pièces tubulaires formant la portion centrale 120 de la table de sciage sont munies, comme on le voit à la figure 6, de pièces de blocage 123 sous forme de pièces de tôle, soudées, dépassant légèrement le diamètre du tube du côté de la pièce de bois 20, de manière à pénétrer cette dernière et à la bloquer lorsqu'une pression d'appui y et appliquée. La pièce de blocage peut être aiguisée afin de permettre une meilleure pénétration de la pièce de bois. Ce même dispositif peut être prévu sur encore d'autres parties du véhicule aptes à supporter des pièces de bois, afin d'empêcher leur déplacement.

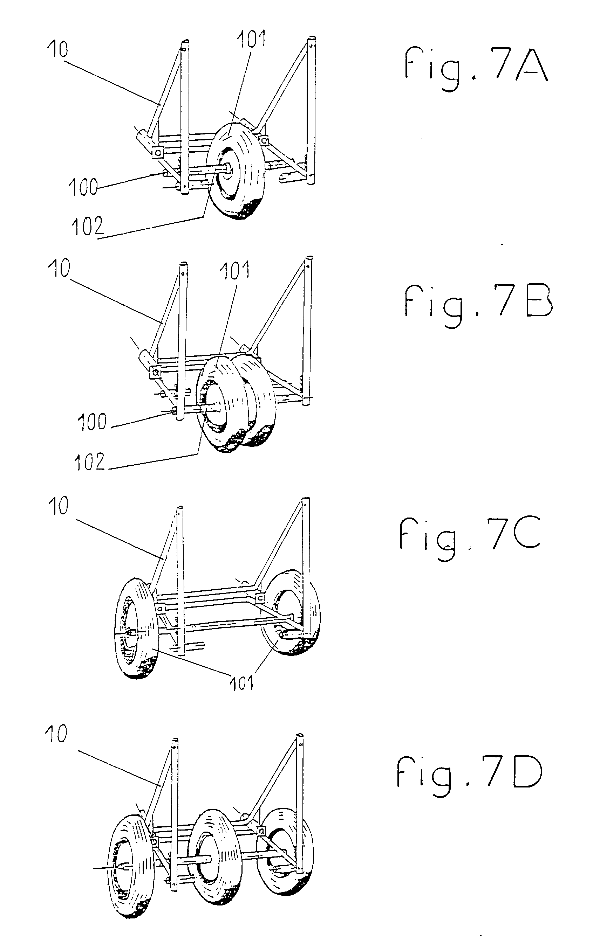

Différentes variantes d'exécution du train de roulement du véhicule de transport sont possibles, dépendant essentiellement du type de terrain dans lequel le véhicule est déplacé. La figure 7A montre uniquement le porteur d'essieu 10 sur lequel une seule roue 101 est montée sur un essieu 102 fixé à des fixations d'essieu 100, ici en position arrière. La figure 7B montre deux roues 101 montées côte à côte sur l'essieu 102, fixé à des fixations d'essieu 100, ici en position avant sur le porteur d'essieu 10. La figure 7C montre que les deux roues 101 sont montées sur un essieu 102 en position arrière sur le porteur d'essieu 10, les deux roues étant montées à l'extérieur du porteur d'essieu 10. La figure 7D montre une configuration semblable à la précédente avec une roue supplémentaire montée à l'intérieure du porteur d'essieu 10. On comprend ici que le porteur d'essieu 10 est muni de fixations d'essieu 100 selon au moins une position arrière et une position avant, ces fixation d'essieu 100 pouvant recevoir un essieu 102 muni de une ou deux roues 101 disposées à l'intérieur du porteur d'essieu 10 ou deux roues disposées à l'extérieur du porteur d'essieu ou une combinaison de ces dispositions. Le véhicule peut donc être composé comme une brouette ou comme une charrette, la ou les roues pouvant être montées selon au moins deux positions différentes de l'essieu, la combinaison et/ou le nombre de roues montées dépendant du type de terrain sur lequel doit circuler le véhicule.

A côté de cette utilisation comme véhicule de transport de bois, le véhicule selon l'invention peut aussi être utilisé de manière très efficace comme support gabarit de sciage de bois.

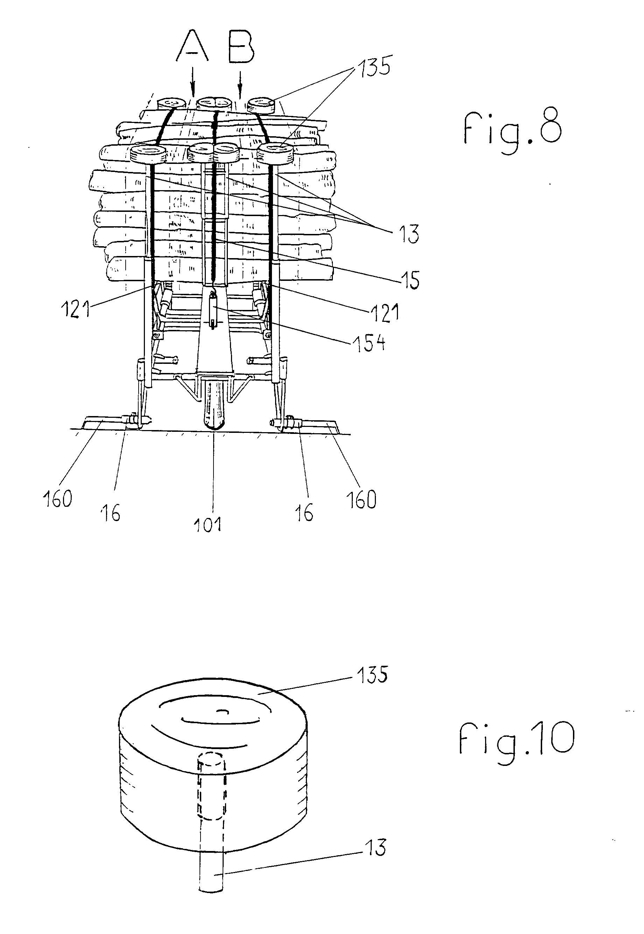

La figure 8 qui est une vue de face du véhicule montre particulièrement bien les possibilités offertes à cet effet par le véhicule selon l'invention. On y voit donc un véhicule, chargé au maximum comme décrit plus haut. La table de sciage 12 est conçue de telle manière qu'il est possible de définir au moins deux plans de coupe A et B entre les éléments constitutifs de la portion centrale 120 de la table de sciage 12 et des éléments de prolongation 13 qui y sont fixés et les éléments constitutifs des portions latérales 121 de la table de sciage avec les éléments de prolongation qui y sont fixés. Ceci est aussi particulièrement visible sur la figure 2. Ces deux plans de coupe A et B permettent de travailler avec une tronçonneuse à chaîne portable, et par exemple de débiter l'ensemble du tas de bois disposés sur le véhicule, comme représenté à la figure 8 en effectuant une première coupe selon le plan A et une seconde coupe selon le plan B. Des coupes d'égalisation peuvent être faites auparavant ou ultérieurement sur les extrémités des pièces de bois afin d'égaliser les longueurs de bûches. La construction du véhicule permet donc, lorsque le véhicule est chargé, de directement débiter le bois chargé en bûches à la tronçonneuse, aucune pièce transversale ne venant limiter le mouvement de la tronçonneuse durant son travail sur le plan de coupe. La figure 2 montre bien que les premières pièces transversales que la tronçonneuse pourrait rencontrer sont celles reliant les faces latérales du porteur d'essieu 10 et du châssis porteur 11, soit des pièces situées nettement plus bas que le plan de coupe. Les figures 3A à 3D montrent bien qu'un espace de sécurité suffisant est aménagé entre le plan de sciage de la table de sciage 12 et ces éléments transversaux des porteurs d'essieu et châssis porteur. Afin d'avoir un degré supérieur de protection de ces éléments métalliques transversaux, l'utilisateur peut introduire une ou plusieurs pièces de bois par-dessus ces éléments transversaux afin de les protéger.

Les figures 3A à 3D montrent en outre l'utilisation possible des séparations 130 selon l'outil de coupe dont on dispose. Un utilisateur muni d'une tronçonneuse de 85 cm et plus de longueur peut charger le véhicule comme selon l'une des figures 3A à 3C vu que la longueur de lame de son outil de coupe st suffisante pour traverser la largeur du tas de bois en une seule passe. Par contre, s'il n'est muni que d'une tronçonneuse de faible longueur, moins de 50 cm, il aura avantage à charger le véhicule comme indiqué à la figure 3D, c'est-à-dire en laissant un espace vide au centre du tas, de manière à pouvoir attaquer celui-ci depuis ses deux faces opposées.

Pour des raisons de sécurité, avant de commencer à débiter le tas de bois, l'utilisateur veillera à le fixer par des moyens de fixation 15 comme décrits précédemment, la figure 8 montrant que trois moyens de fixation 15 ont été utilisés dans cet exemple. Vu que après sciage, le foisonnement du bois empilé diminue légèrement, cette diminution de serrage est absorbée par le tendeur à ressort 154, faisant que le moyen de fixation 15 reste généralement tendu après sciage.

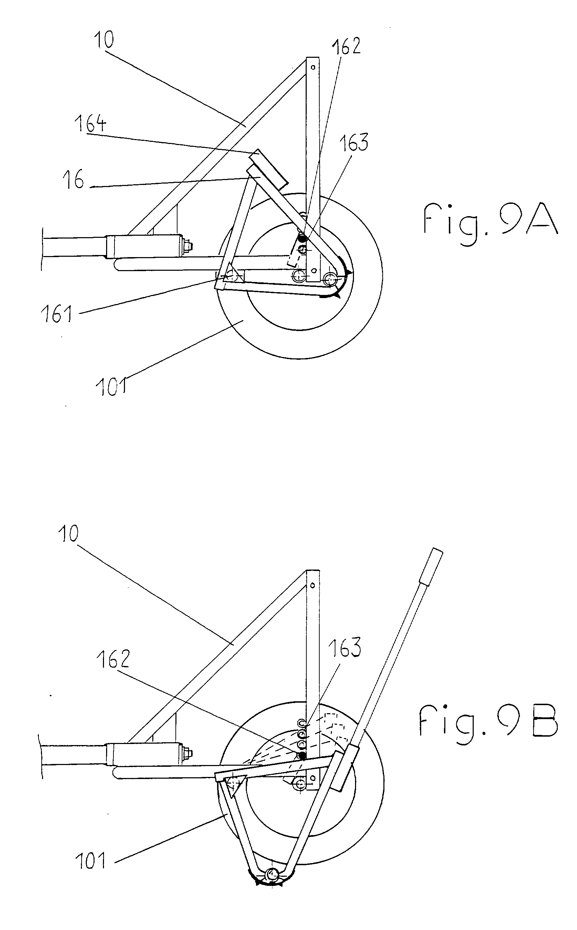

La figure 8 montre une autre précaution prise par l'utilisateur avant sciage, soit de stabiliser le véhicule, notamment lorsque le train de roulement de ce dernier est monté comme une brouette soit avec une seule roue 101. Vu que l'effort exercé par la tronçonneuse pourrait déstabiliser le véhicule en appui sur une seule roue, il est possible d'abaisser des béquilles d'appui latérales 16. On voit sur la figure que lorsque ces béquilles 16 sont abaissées et que les prolongations de béquille 160 y sont raccordées, la stabilité du véhicule en position de support gabarit de sciage est complètement assurée. La figure 9A montre une portion du porteur d'essieu 10 avec la roue 101 et la béquille 16 en position relevée. La béquille 16 est, dans la forme d'exécution représentée ici, constituée à partir de tubes cintrés et soudés afin de former un triangle offrant une grande résistance mécanique. La béquille 16 est montée en pivotement dans un logement d'axe de béquille 161, étant maintenue en position relevée par une goupille 162, en appui contre un des tubes formant l'un des côtés du triangle et introduite dans un parmi plusieurs logements de goupilles 163. En retirant la goupille 162, et en introduisant un manche faisant office de levier dans un logement adéquat 164 de la béquille, on peut la faire pivoter de manière à ce qu'elle vienne en appui sur le sol par l'une des pointes du triangle. La béquille peut être bloquée dans cette position en réintroduisant la goupille 162 dans l'un des logements de goupille, la béquille venant alors en appui par un autre de ses côtés contre cette goupille. En agissant de même sur la béquille opposée, le véhicule est maintenant supporté par ses deux béquilles, la roue centrale étant légèrement surélevée comme on le voit à la figure 8 ; le véhicule est donc complètement stabilisé. Pour le cas où le sol n'est pas horizontal, on voit sur la figure 9B que les logements de goupilles 163 sont disposés les uns au dessus des autres, il est donc possible, en choisissant le logement adéquat, de compenser une pente du sol en décalant les positions d'appui de l'une ou l'autre des béquilles, comme représenté en traits interrompus sur la figure 9B, de manière à conserver le plan de coupe 122 de la table de sciage relativement horizontal. Les prolongations de béquilles 160 améliorent encore cette stabilité. De préférence les zones de contact avec le sol des béquilles 16 et des prolongations de béquilles 160 sont munies de crampons de manière à mieux agripper le sol dans le cas où ce dernier est dur ou gelé.

L'utilisation des béquilles 16 permet aussi d'utiliser le véhicule comme gabarit de sciage fixe, c'est-à-dire sans qu'aucune roue n'y soit montée.

La figure 8 montre en outre que les extrémités des prolongations 13 sont munies, de manière optionnelle, de gabarits 135 formés, comme on le voit sur la figure 10, à partir de portions de pièces de bois d'environ 10 cm de longueur et de diamètre, percées sur une face d'un trou borgne permettant d'y introduire l'extrémité d'un tube de prolongation. Ainsi, en se repérant à ces pièces de bois, l'utilisateur peut facilement déterminer l'endroit où amorcer son plan de coupe. Ces pièces de bois formant gabarit protègent en outre les tubes de prolongation de coups de scie susceptibles de les endommager et peuvent très facilement être remplacées en cas d'endommagement.

De manière générale, le véhicule et ses divers composants décrits ci-dessus sont réalisés de préférence complètement ou partiellement à partir de tubes et/ou de profilés et/ou de pièces de tôle métalliques, de préférence en aluminium ou alliage d'aluminium pour des raisons de poids. Par contre, certaines des pièces constitutives, par exemple les planches 133 des éléments de séparation 130 ainsi que les gabarits 135 sont de préférence en bois vu qu'ils sont facilement susceptibles d'être touchés et endommagés par la lame de la tronçonneuse en action. Etant en bois, ces éléments sont très facilement remplaçables par l'utilisateur.

A côté des multiples possibilités et variantes d'utilisation du véhicule telles que décrites ci-dessus, ce véhicule, de par sa construction modulaire peut encore être utilisé à d'autres fins. Par exemple, en retirant la table de sciage, on dispose d'un cadre de véhicule sur lequel d'autres accessoires peuvent être installés, comme par exemple une benne, un cadre support de cageots ou autres.

Le véhicule selon l'invention tel que proposé ici remplit parfaitement le but pour lequel il a été conçu, à savoir le transport de bois ainsi que le débitage du bois avant ou après son transport, sa modularité autorisant encore d'autres utilisations. Il est à remarquer en outre que le véhicule selon l'invention a été spécialement étudié afin de permettre un travail en toute sécurité, en particulier lorsqu'on travaille avec des outils dangereux comme des tronçonneuses à chaîne.

## Revendications

1. Véhicule (1) de transport de bois de coupe,
**caractérisé en ce qu'**il comprend une table de sciage (12) comprenant des moyens de fixation (13, 130) de pièces de bois pour le transport, ainsi qu'une portion centrale (120) et deux portions latérales (121), déterminant deux plans de coupe (A,B), pour le passage d'un outil de coupe, lesdits plans de coupe ne présentant aucun obstacle au passage dudit outil de coupe, chacun desdits plans de coupe étant disposé entre un côté de la portion centrale et la portion latérale qui lui fait face de la table de sciage.

2. Véhicule selon la revendication 1, **caractérisé en ce que** la portion centrale (120) et les portions latérales (121) de la table de sciage (12) peuvent être munies de pièces de prolongation (13) afin d'augmenter le volume de bois transporté par et débité sur ledit véhicule.

3. Véhicule selon l'une des revendications précédentes,
**caractérisé en ce que** la table de sciage (12) comprend un plan de sciage (120) disposé approximativement parallèlement au sol lorsque le véhicule est en position pour que le bois y soit débité.

4. Véhicule selon l'une des revendications précédentes,
**caractérisé en ce que** la table de sciage (12) comprend des dispositifs de fixation (131) de moyens de séparation (130) permettant de diviser le volume du bois de coupe en deux portions.

5. Véhicule selon la revendication 4, **caractérisé en ce que** les moyens de séparation (130) sont agencés de manière à laisser un espace vide entre les deux dites portions.

6. Véhicule selon l'une des revendications précédentes,
**caractérisé en ce qu'**il comprend en outre un porteur d'essieu (10) et un châssis porteur (11), constitués d'éléments indépendants, assemblables directement ou par des longerons (14).

7. Véhicule selon la revendication 6, **caractérisé en ce que** la portion centrale (120) et les portions latérales (121) de la table de sciage sont directement assemblables sur le porteur d'essieu (10) et le châssis porteur (11).

8. Véhicule selon l'une des revendications 6 ou 7, **caractérisé en ce que** le porteur d'essieu (10) est constitué de profilés métalliques soudés entre eux et présentant un moyen de liaison avec le châssis porteur (11), un moyen de liaison avec la table de sciage (12) et au moins un dispositif de fixation (100) d'un essieu (102).

9. Véhicule selon la revendication 8, **caractérisé en ce que** l'essieu (102) peut être fixé au porteur d'essieu (10) selon au moins deux positions différentes.

10. Véhicule selon l'une des revendications 8 ou 9,
**caractérisé en ce que** ledit essieu (102) est apte à recevoir au moins une roue centrale (101) et/ou deux roues latérales.

11. Véhicule selon la revendication 8, **caractérisé en ce que** le porteur d'essieu (10) comprend en outre, sur chacune de ses faces latérales, un dispositif de fixation (161) d'une béquille (16), chacune des béquilles étant apte à être actionnée par un levier afin de prendre une position d'appui.

12. Véhicule selon la revendication 6, **caractérisé en ce que** le châssis porteur (11) comprend des éléments de fixation (110) de brancards (111).

13. Véhicule selon l'une des revendications précédentes,
**caractérisé en ce que** la table de sciage (12) comprend des moyens de fixation du bois (15), aptes à fixer le bois sur le véhicule aussi bien avant que après débitage.

14. Véhicule selon l'une des revendications précédentes,
**caractérisé en ce que** la table de sciage (12) est munie de pièces d'arrêt (123) prévues pour s'incruster légèrement dans les pièces de bois disposées sur ladite table de sciage, étant ainsi aptes à empêcher un déplacement desdites pièces de bois.

15. Véhicule selon l'une des revendications précédentes,
**caractérisé en ce que** les extrémités des pièces de prolongation (13) sont aptes à recevoir des pièces de gabarit de sciage (135).

16. Véhicule selon la revendication 1, **caractérisé en ce qu'**en retirant la table de sciage et en ajoutant un ou des accessoires adéquats, ledit véhicule peut être utilisé à d'autres usages.
